# EUROPEAN PATENT SPECIFICATION

(11) **EP 4 377 152 B1**
(45) Date of publication and mention of the grant of the patent: **02.04.2025**
(21) Application number: 22755201.5
(22) Date of filing: 27.07.2022
(51) Int. Cl.: B60Q 1/22, B60Q 1/24, B60Q 1/30, B60Q 1/48, B60Q 1/50, B62D 35/00

(54) **REAR SPOILER FOR A VEHICLE WITH LIGHT CONTROL**
HECKSPOILER MIT LICHTSTEUERUNG FÜR EIN FAHRZEUG
BECQUET POUR UN VEHICULE AVEC COMMANDE D'ILLUMINATION

(30) Priority: 27.07.2021 GB 202110774
(43) Date of publication of application: 05.06.2024
(73) Proprietor: Jaguar Land Rover Limited, Coventry, Warwickshire CV3 4LF (GB)
(72) Inventor: OWEN, Simon, Coventry Warwickshire CV3 4LF (GB)
(74) Representative: Jaguar Land Rover Patents Department
(86) International application number: PCT/EP2022/071077
(87) International publication number: WO 2023/006816

(56) References cited:
- CN-U- 210 554 468
- DE-A1- 102017 127 495
- US-A1- 2014 192 545
- US-A1- 2015 151 673
- US-A1- 2019 193 626
- US-A1- 2020 198 533
- US-B1- 9 896 023

## Description

### TECHNICAL FIELD

The present disclosure relates to rear spoiler light control for a vehicle. In particular, but not exclusively it relates to rear spoiler light control in a passenger vehicle.

### BACKGROUND

Some vehicles comprise rear spoilers. In examples, rear spoilers of a vehicle can comprise a light or lights. However, lights of a rear spoiler may not be used effectively or efficiently.

DE102017127495A1 relates generally to a vehicle display device and, more particularly, to a lighting device configured to output a message. CN210554468U relates to a vehicle lighting system with good lighting effects. US2014/192545A1 relates to an aerodynamic spoiler for a pickup truck and a method for facilitating the provision of such aerodynamic spoilers for pickup trucks of various makes and models and further an aerodynamic spoiler having LED lights with power and signals extending from the original lighting system of the vehicle. US2015/151673A1 generally relates to vehicle lighting systems, and more particularly, to vehicle lighting systems employing one or more photoluminescent structure. US9896023B1 generally relates to vehicular lighting, and more particularly to vehicle lighting assemblies disposed on an exterior portion of the vehicle. US2019/193626A1 relates to a method and an apparatus for preventing collisions between traveling vehicles, and more specifically, to a method and an apparatus for preventing collisions between vehicles, which dynamically control luminance of tail lights of vehicle tail lamps in response to a speed difference between a vehicle and a following vehicle.

### SUMMARY OF THE INVENTION

It is an aim of the present invention to address one or more of the disadvantages associated with the prior art.

According to an aspect of the invention there is provided a control system for a vehicle with the features of independent claim 1.

An advantage is efficient and effective use of one or more rear spoiler down lights. An advantage is use of one or more rear spoiler down lights to assist in user actions outside and/or proximate a vehicle such as trailer hitching and so on.

In some examples, the control system is configured to control a change in colour and intensity of the one or more rear spoiler down lights from a first colour and intensity to a second colour and intensity in dependence on the determination. In some examples, the control system is configured to control at least one of colour and a change in intensity from a first non-zero intensity to a second, different non-zero intensity of the one or more rear spoiler down lights in dependence on the determination. In some examples, colour of the one or more rear spoiler down lights is user selectable. In some examples, the control system is configured to change colour of the one or more rear spoiler down lights in dependence on the selected travel direction. In some examples, the control system is configured to control the one or more rear spoiler down lights to have a red colour when a forward travel direction is selected. In some examples, the control system is configured to activate the one or more rear spoiler down lights on selection of a travel direction. The control system is configured to determine an ambient light level and to activate the one or more rear spoiler down lights on selection of a reverse travel direction and the determined ambient light level being above or below a threshold. In some examples, the control system is configured to control the one or more rear spoiler down lights to have a red colour when the vehicle is in a forward travel direction and the vehicle speed is below a threshold.

In some examples, the control system is configured to determine driving conditions of the vehicle and wherein the threshold is dependent on one or more of the determined driving mode of the vehicle and the determined driving conditions.

In some examples, the control system is configured to change colour of the one or more rear spoiler down lights when the vehicle speed exceeds the threshold.

In some examples, the control system is configured to determine sensor information from at least one sensor signal and to determine, in dependence on the determined sensor information, at least one of trailer light plug connection, trailer proximate rear of the vehicle, and ambient light level;
and the control system is configured to activate the one or more rear spoiler down lights in dependence on the determination made in dependence on the determined sensor information.

In some examples, the control system is configured to maintain activation of the one or more rear spoiler down lights for a predetermined period after at least one drive unit of the vehicle has been turned off.

In some examples, the control system is configured to reduce the intensity of the one or more rear spoiler down lights in dependence on a reduction in determined ambient light level.

In some examples, the control system is configured to activate the one or more rear spoiler down lights during one or more autonomous slow speed manoeuvres.

In some examples, the control system is configured to control orientation of the one or more rear spoiler down lights to point the one or more rear spoiler down lights in a substantially rearward direction relative to the vehicle.

In some examples, the control system is configured to control, when the vehicle is stationary, the one or more rear spoiler downlights in dependence on at least one of: use of one or more further lights of the vehicle and music being played by the vehicle.

According to a further aspect of the invention there is provided a vehicle comprising a control system as described herein and one or more rear spoiler down lights.

According to a further aspect of the invention there is provided a method of controlling one or more rear spoiler down lights of a vehicle with the features of method claim 15.

In some examples, the method comprises:
determining sensor information from at least one sensor signal;
determining, in dependence on the determined sensor information, at least one of trailer light plug connection, trailer proximate rear of the vehicle, and ambient level; and
activating the one or more rear spoiler down lights in dependence on the determination made in dependence on the determined sensor information.

In some examples, the method comprises activating the one or more rear spoiler down lights during one or more autonomous slow speed manoeuvres.

According to a further aspect there is provided computer software that, when executed, is arranged to perform at least a part of any one or more of the methods described herein.

According to an aspect there is provided a control system for a vehicle, the control system comprising one or more controllers, wherein the control system is configured to:
determine one or more of vehicle travel direction selection, vehicle speed, and vehicle driving mode; and
control at least one of colour and a change in intensity from a non-zero intensity of one or more rear spoiler down lights of the vehicle in dependence on the determination.

Within the scope of the invention, which is defined by the appended claims, it is expressly intended that the various aspects, embodiments, examples and alternatives set out in the preceding paragraphs, in the claims and/or in the following description and drawings, and in particular the individual features thereof, may be taken independently or in any combination within the scope of the claims. That is, all embodiments and/or features of any embodiment can be combined in any way and/or combination within the scope of the claims, unless such features are incompatible.

### BRIEF DESCRIPTION OF THE DRAWINGS

One or more embodiments of the invention will now be described, by way of example only, with reference to the accompanying drawings, in which:
FIG. 1 illustrates an example of a vehicle;
FIGS. 2A, 2B illustrate an example of a control system and of a non-transitory computer readable storage medium;
FIG. 3 illustrates an example of a method;
FIG. 4 illustrates an example of use of a rear spoiler down light;
FIG. 5 illustrates an example of a rear spoiler down light;
FIG. 6 illustrates an example of a rear spoiler down light;
FIG. 7 illustrates an example of a rear spoiler down light; and
FIG. 8 illustrates an example of a rear spoiler down light.

### DETAILED DESCRIPTION

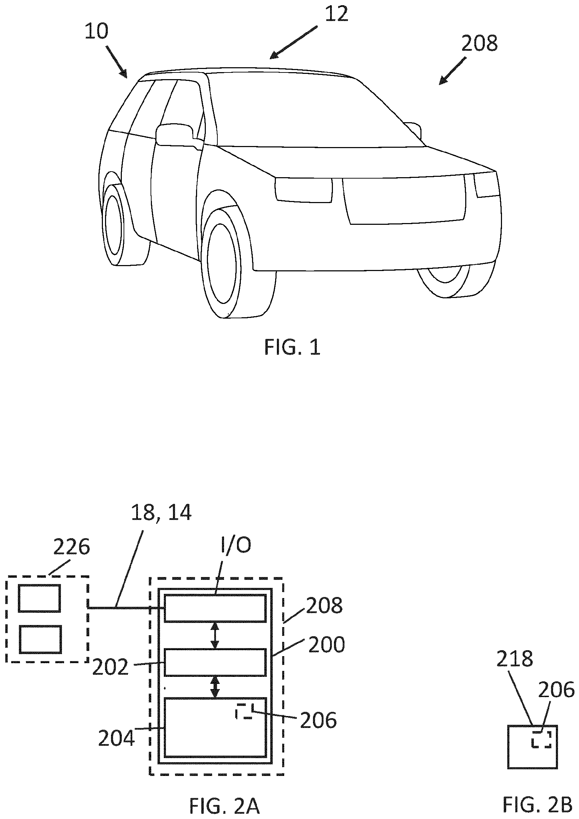

FIG. 1 illustrates an example of a vehicle 10 in which embodiments of the invention can be implemented. In some, but not necessarily all examples, the vehicle 10 is a passenger vehicle 10, also referred to as a passenger car or as an automobile. In other examples, embodiments of the invention can be implemented for other applications, such as commercial vehicles 10.

The vehicle 10 can be any suitable type of vehicle for example a hybrid electric vehicle (HEV) such as a plugin hybrid electric vehicle (PHEV), an electric vehicle (EV) and/or a vehicle comprising an internal combustion engine (ICE).

The vehicle 10 comprises a plurality of systems including a control system 208 and one or more human machine interfaces. The human machine interfaces of the vehicle 10 comprise one or more controls usable by a driver of the vehicle 10, including one or more interfaces allowing the driver and/or another user of the vehicle 10 to input information and/or make one or more selections and/or to control one or more systems of the vehicle 10.

The control system 208 is configured to implement any one or more of the methods described herein.

In the example of FIG. 1, the vehicle 10 comprises one or more rear spoiler down lights 12. Consequently, FIG. 1 illustrates a vehicle 10 comprising a control system 208 as described herein and one or more rear spoiler down lights 12.

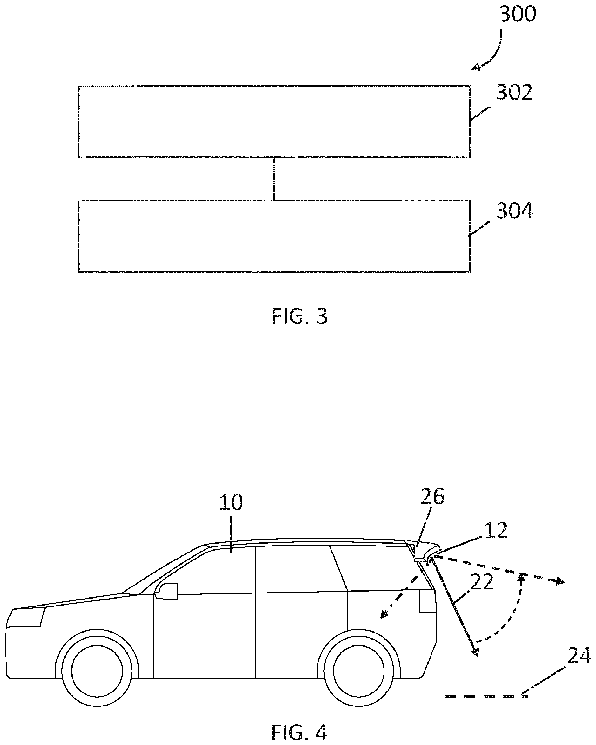

In examples, a rear spoiler down light 12 can be considered a rear spoiler light, a light on the underside of a rear spoiler 26, a generally downward pointing light located on a rear spoiler 26 and/or a light located on a rear spoiler 26 configured to illuminate an area proximate and/or adjacent to the rear of the vehicle 10. For example, a rear spoiler down light 12 can be considered a light located on the underside of a rear spoiler 26 of a vehicle 10. See, for example, FIG. 4 which illustrates an example of the rear of a vehicle 10 comprising a rear spoiler down light 12.

In the example of FIG. 4, the vehicle 10 comprises a rear spoiler 26 comprising a light 12, which can be considered a rear spoiler down light 12. As illustrated in the example of FIG. 4, the rear spoiler down light 12 is configured/arranged to direct light 22 in a generally downwards direction. This is illustrated in the example of FIG. 4 by the solid arrow pointing from the rear spoiler down light 12 in a generally downward direction. As can be seen in the example of FIG. 4, the rear spoiler down light 12 is configured to illuminate an area 24 proximate/adjacent to the rear of the vehicle 10.

In some examples, one or more rear spoiler down lights 12 can be adjusted to point in a generally backwards direction relative to the vehicle 10 as indicated in the example of FIG. 4 by the dotted arrows. In some examples, one or more rear spoiler down lights 12 can be adjusted to direct light 22 internally to the vehicle 10, for example into one or more load carrying spaces of the vehicle 10. This is indicated in the example of FIG. 4 by the dot-dashed arrow.

In examples the direction of one or more rear spoiler down lights 12 can be adjusted in dependence on one or more factors. For example, depending on the vehicle 10 being stationary and the rear access being open light 22 can be directed internally to the vehicle 10.

In examples, a rear spoiler down light can comprise any suitable light emitting element or elements. For example, a rear spoiler down light can comprise one or more of one or more light emitting diodes, one or more incandescent bulbs, one or more halogen compact fluorescent lamps and so on. In examples, the one or more rear spoiler down lights 12 can be single colour or multi colour. In examples, the vehicle 10 can comprise any suitable number of rear spoiler down lights 12 in any suitable location and/or arrangement.

FIG. 2A illustrates how the control system 208 may be implemented. The control system 208 of FIG. 2A illustrates a controller 200. In other examples, the control system 208 may comprise a plurality of controllers 200 onboard and/or offboard the vehicle 10. In examples any suitable control system 208 can be used.

The controller 200 of FIG. 2A includes at least one processor 202; and at least one memory device 204 electrically coupled to the electronic processor 202 and having instructions 206 (for example a computer program) stored therein, the at least one memory device 204 and the instructions 206 configured to, with the at least one processor 202, cause any one or more of the methods described herein to be performed.

FIG. 2A therefore illustrates a control system 208, wherein the one or more electronic controllers 200 collectively comprise:
at least one electronic processor 202 having an electrical input for receiving information associated with rear spoiler downlight control and; at least one electronic memory device 204 electrically coupled to the at least one electronic processor 202 and having instructions 206 stored therein;
and wherein the at least one electronic processor 202 is configured to access the at least one memory device 204 and execute the instructions thereon so as to cause the control system 208 to perform and/or cause performance of any one or more of the methods described herein.

Also illustrated in FIG. 2A are one or more vehicle systems 226. In examples, the vehicle system(s) 226 can comprise any suitable vehicle system(s). For example, the vehicle system(s) 226 can comprise any suitable vehicle system(s) 226 from which the control system 208 can receive, directly or indirectly, one or more signals 18, for example comprising sensor information 14, and/or to which the control system 208 can transmit, directly or indirectly, one or more signals 18.

In the example of FIG. 2A, the one or more vehicle systems 226 comprise one or more systems involved in control of one or more rear spoiler down lights 12. In the example of FIG. 2A, the one or more vehicle systems 226 comprise one or more systems involved in determining one or more of vehicle travel direction selection, vehicle speed, and vehicle driving mode. In the example of FIG. 2A, the one or more vehicle systems 226 comprise one or more sensors, and/or one or more systems from which sensor information 14 can be received by the control system 208. For example, one or more systems configured to sense ambient conditions exterior to the vehicle 10.

In examples, one or more cameras of the vehicle 10 can be considered to be and/or comprise one or more sensors of the vehicle 10.

In some examples, the one or more vehicle systems 226 also comprise one or more human machine interfaces. In the illustrated example, the one or more human machine interfaces comprise one or more interfaces allowing a driver and/or user of the vehicle 10 to control one or more features, such as colour and/or intensity of the rear spoiler down light(s) 12.

FIG. 2B illustrates a non-transitory computer readable storage medium 218 comprising the instructions 206 (computer software). Accordingly, FIG. 2B illustrates a non-transitory computer readable medium 218 comprising computer readable instructions 206 that, when executed by a processor 202, cause performance of at least the method of one or more of FIG. 3 and/or as described herein.

FIG. 3 illustrates an example of a method 300. The method 300 can be considered a method 300 of controlling one or more rear spoiler down lights 12 of a vehicle 10. In examples, the method 300 is performed by the control system 208 of FIGS. 2A, 2B. That is, in examples, the control system 208 described herein comprises and/or provides means for performing the method 300. However, any suitable means may be used to perform the method 300. In examples, the method 300 can be considered a computer implemented method 300 for a vehicle 10. One or more of the features discussed in relation to FIG. 3 can be found in one or more of the other figures.

At block 302 the method 300 comprises determining one or more of vehicle travel direction selection, vehicle speed, and vehicle driving mode. As used herein, the term "determining" (and grammatical variants thereof) can include, not least: calculating, computing, processing, deriving, investigating, looking up (for example, looking up in a table, a database or another data structure), ascertaining and the like. Also, "determining" can include receiving (for example, receiving information), accessing (for example, accessing data in a memory) and the like. Also "determining" can include resolving, selecting, choosing, establishing, and the like. In examples, determining one or more of vehicle travel direction selection, vehicle speed, and vehicle driving mode can be performed in any suitable way using any suitable method. For example, determining one or more of vehicle travel direction selection, vehicle speed, and vehicle driving mode comprises receiving one or more signals 18 from one or more vehicle systems 226. See, for example, FIG. 2A. In some examples, determining one or more of vehicle travel direction selection, vehicle speed, and vehicle driving mode comprises determining one or more inputs made by a driver of the vehicle 10 using one or more human machine interfaces of the vehicle 10. However, in some examples, determining one or more of vehicle travel direction selection, vehicle speed, and vehicle driving mode does not comprise determining one or more inputs made by a driver of the vehicle 10, for example some, but not necessarily all, examples involving one or more advanced driver assistance system (ADAS) functions.

In examples, vehicle travel direction selection can be considered a selection of forward or reverse travel direction for the vehicle 10. In some examples, vehicle travel direction selection can be considered a selection of a vehicle configuration to enable the vehicle 10 to travel in a forward or reverse direction. In examples, vehicle travel direction selection can be considered direction of travel selection, vehicle gear selection, vehicle operating mode selection, and/or forward or reverse selection and so on. In some examples, vehicle travel direction selection can be considered selection of direction of rotation of one or more electric motors of the vehicle 10.

In examples, vehicle gear selection can be considered selection of a forward or reverse gear. In some examples, vehicle gear selection can be considered selection of a particular gear.

In examples, a vehicle operating mode can be considered an operating mode of a vehicle 10 comprising an automatic gearbox. In examples, vehicle operating mode can comprise, at least, drive, reverse, park, neutral, sport and so on.

In examples, any suitable measurement or measurements of vehicle speed can be used. In some examples, vehicle speed can be considered a speed of a vehicle 10 across the ground rather than, for example, speed of one or more of the wheels of the vehicle 10.

In examples, vehicle driving mode can be considered a selection of a driving mode of the vehicle 10 that configures the vehicle 10 for one or more different driving scenarios and/or circumstances. In examples, vehicle driving mode can comprise road driving, off-road driving, sand driving, and/or autonomous driving and so on. For example, vehicle driving mode can comprise one or more ADAS functions.

At block 304 method 300 comprises controlling one or more rear spoiler down lights 12 to illuminate at a first colour and intensity in dependence on the determination.

Consequently, FIG. 3 illustrates a method of controlling one or more rear spoiler downlights 12 of a vehicle 10, comprising:
determining one or more of vehicle travel direction selection, vehicle speed and vehicle driving mode; and
controlling one or more rear spoiler down lights 12 to illuminate at a first colour and intensity in dependence on the determination.

In examples, the one or more rear spoiler down lights 12 can be controlled to illuminate at a first colour and intensity in any suitable way in dependence on the determination. For example, the one or more rear spoiler down lights 12 can be controlled to illuminate at any suitable colour or colours and at any suitable intensity or intensities in dependence on the determination. In examples, controlling the one or more rear spoiler down lights 12 to illuminate at a first colour and intensity comprises changing the one or more rear spoiler down lights 12 from an off state to an illuminated state.

In some examples, changing the one or more rear spoiler down lights 12 from an off state to an illuminated state can be considered activating the one or more rear spoiler down lights 12. In examples, the first colour of the one or more rear spoiler down lights 12 can be and/or comprise any suitable colour or colours including colour(s) outside of the visible spectrum. For example, the one or more rear spoiler downlights 12 of the vehicle 10 can emit infrared length wavelengths, near ultraviolet wavelengths, ultraviolet wavelengths and/or radio wavelengths and so on. In some examples, controlling the one or more rear spoiler downlights 12 to illuminate at a colour can be considered controlling wavelength(s) of emission of the one or more rear spoiler down lights 12. In examples, controlling the one or more rear spoiler down lights 12 to illuminate at an intensity can comprise increasing and/or decreasing intensity of the one or more rear spoiler down lights 12. For example, the intensity of one or more of the one or more rear spoiler down lights 12 can be increased or decreased. In some examples, the intensity of one or more of the one or more rear spoiler down lights 12 of the vehicle 10 can be increased while the intensity of one or more of the one or more rear spoiler down lights are decreased and so on. In examples, the intensity of one or more rear spoiler down lights 12 can be considered brightness, luminosity and/or radiance of the one or more rear spoiler down lights 12.

In examples, controlling the one or more rear spoiler down lights 12 in dependence on the determination can be considered controlling the one or more rear spoiler down lights 12 based on and/or in response to the determination.

In examples, at block 304 method 300 comprises controlling at least one of colour and a change in intensity from a first non-zero intensity to a second, different non-zero intensity of one or more rear spoiler down lights 12 in dependence on the determination. The colour and/or change in intensity from a first non-zero intensity to a second, different non-zero intensity of the one or more rear spoiler down lights 12 of the vehicle 10 can be controlled in any suitable way in dependence of the determination. In some examples, changing intensity from a first non-zero intensity to a second, different non-zero intensity can be and/or comprise any suitable change in intensity. For example, the one or more rear spoiler down lights can be at any suitable non-zero intensity and can change to any other suitable, different non-zero intensity.

In some examples, at block 304 method 300 comprises controlling at least one of colour and a change in intensity from a non-zero intensity of one or more rear spoiler down lights 12 of the vehicle 10 in dependence on the determination. In some examples, method 300 comprises controlling a change in colour and intensity of the one or more rear spoiler down lights 12 from a first colour and intensity to a second colour and intensity in dependence on the determination. That is, in some examples, the one or more rear spoiler down lights 12 are controlled in dependence on the determination to change from a first colour and intensity to a second, different colour and intensity. Accordingly, in such examples controlling one or more rear spoiler downlights 12 to illuminate at a first colour and intensity can be considered to comprise controlling one or more rear spoiler down lights 12 to change from a first colour and intensity to a second, different colour and intensity.

In examples, the colour of the one or more rear spoiler down lights 12 is user selectable. For example, the colour of the one or more rear spoiler down lights 12 to be used in dependence on one or more different determinations can be selected by the user. Accordingly, in some examples, the colour(s) that the one or more rear spoiler down lights 12 will illuminate at under different circumstances can be user selectable.

In examples, a colour or colours of the one or more rear spoiler down lights 12 to be used can be selected in any suitable way using any suitable method. In some examples, a user, such a driver of the vehicle 10, can use one or more human machine interfaces of the vehicle 10 to select one or more colours for the one or more rear spoiler down lights 12. For example, one or more buttons at any suitable location or locations in and/or on the vehicle 10 can be used to select one or more colours for the one or more rear spoiler down lights 12. In some examples, a user can select one or more colours of the one or more rear spoiler down lights 12 using a personal device, such as a mobile telephone, connected, directly or indirectly, to the vehicle 10 to select one or more colours of the one or more rear spoiler down lights 12.

In some examples, the method 300 comprises changing colour of the one or more rear spoiler down lights 12 in dependence on the selected travel direction. In examples, the colour of the one or more rear spoiler down lights 12 can be changed in dependence on the selected travel direction in any suitable way. For example, colour of the one or more rear spoiler down lights 12 can be changed in dependence on the selected vehicle gear or operating mode. In some examples, the colour of the one or more rear spoiler down lights 12 can be changed from a first colour to a second, different colour upon a change in selected travel direction.

In some examples, the method 300 comprises controlling the one or more rear spoiler down lights 12 to have a red colour when a forward travel direction is selected. In examples, the one or more rear spoiler down lights 12 having a red colour can be considered the rear spoiler down lights 12 emitting and/or displaying a red colour. In some examples, the one or more rear spoiler down lights 12 having a red colour can be considered the one or more rear spoiler down lights 12 emitting light in a frequency range corresponding to a red colour.

In examples, method 300 comprises activating the one or more rear spoiler down lights 12 on selection of a travel direction. For example, the one or more rear spoiler down lights 12 can be activated on selection of a vehicle gear or vehicle operating mode.

In examples, activating one or more rear spoiler down lights 12 can be considered switching on and/or illuminating and/or increasing the intensity of the one or more rear spoiler down lights from zero intensity and so on.

In some examples, activating the one or more rear spoiler down lights 12 on selection of a travel direction can be considered activating the one or more rear spoiler down lights 12 upon selection, and/or in response to selection, and/or in dependence on selection and/or based on selection of a travel direction and so on.

In examples, method 300 comprises activating the one or more rear spoiler down lights 12 on selection of a reverse travel direction. The one or more rear spoiler down lights can, for example, be activated to be/have a white colour on selection of a reverse travel direction.

In some examples, method 300 comprises determining an ambient light level and activating the one or more rear spoiler down lights 12 on selection of a reverse travel direction and the determined ambient light level being above or below a threshold. In examples, the one or more rear spoiler down lights 12 can be activated having any suitable colour or colours based on determined ambient light level. In examples, an ambient light level can be considered a light level outside the vehicle 10. In some examples, an ambient light level can be determined in any suitable way using any suitable method. For example, an ambient light level can be determined from one or more sensor signals 18, comprising sensor information 14. See, for example, FIG. 2A. Any suitable threshold for the ambient light level can be used. Additionally, or alternatively, the threshold to be used for the ambient light level can be determined and/or set in any suitable way. In some examples, the threshold for the ambient light level can be user selectable. This is advantageous as, for example, activating one or more rear spoiler down lights when the ambient light level is below a threshold improves rear camera visibility.

In examples, method 300 comprises controlling the one or more rear spoiler down lights 12 to have a red colour when the vehicle 10 is in a forward travel direction and the vehicle speed is below a threshold. In examples, any suitable speed threshold can be used and can be determined in any suitable way using any suitable method. For example, a threshold in the range 5 kilometers per hour (kph) to 40 kph can be used. In some examples, a threshold in the range 10 kph to 30 kph can be used. In some examples, a threshold in the range 10kph to 20 kph can be used. In examples, the threshold can be dependent on one or more factors and/or variables. For example, the threshold can be dependent on driving conditions of the vehicle 10 and/or a determined driving mode of the vehicle 10.

Accordingly, in some examples, method 300 comprises determining driving conditions of the vehicle 10, wherein the threshold is dependent on one or more of the determined driving mode of the vehicle 10 and the determined driving conditions. The driving conditions of the vehicle 10 can be determined in any suitable way using any suitable method. For example, determining driving conditions of the vehicle 10 can comprise using sensor information 14 from one or more signals 18. Additionally, or alternatively, determining driving conditions of a vehicle 10 can comprise receiving information, in any suitable way, to allow a determination of the driving conditions of a vehicle 10. For example, for on road driving conditions, a threshold of 10 kph can be used. For example, for off road driving conditions, a threshold of 20 kph can be used. For example, in lower visibility conditions, such as sand driving, a threshold of 40 kph can be used. For example, in conditions such as convoy driving, a threshold of 40 kph can be used and so on.

In some examples, method 300 comprises changing colour of the one or more rear spoiler down lights 12 when the vehicle speed exceeds the threshold. In examples, the colour of the one or more rear spoiler down lights 12 can change from any suitable colour to any suitable, different colour when the vehicle speed exceeds the threshold. For example, the colour of the one or more rear spoiler down lights can change from red to white or white to red when the vehicle speed exceeds the threshold.

In some examples, the colours involved can be dependent on the vehicle driving mode. For example, when the vehicle is in a first vehicle driving mode the colour of the one or more rear spoiler down lights 12 can change differently when the vehicle speed exceeds the threshold compared to when the vehicle 10 is in a different vehicle driving mode.

In examples, vehicle driving mode can be TR mode or ADAS level/ autonomous drive mode.

In some examples, when the vehicle is parking it may need to maintain white lights on the one or more rear spoiler down lights 12 in both drive and reverse to ensure cameras of the vehicle 10 have clear sight of obstacles.

Additionally, or alternatively, when in an off-road trail white or red may be used in drive or used if below a speed threshold so as not to keep changing colour of the one or more rear spoiler down lights 12 when trying to rock the car out of ruts for example.

In some examples, method 300 comprises determining sensor information 14 from at least one sensor signal 18 and determining in dependence on the determined sensor information 14, at least one of trailer light plug connection, trailer proximate to the rear of a vehicle, and ambient light level and activating the one or more rear spoiler down lights 12 in dependence on the determination made in dependence on the determined sensor information 14. In some examples, sensor information can comprise any suitable information from any suitable sensor(s). For example, connection of at least one trailer light can cause at least one signal to be transmitted to the control system 208 to cause activation of the one or more rear spoiler down lights 12.

In examples, sensor information can comprise images from one or more cameras, such as rear cameras of the vehicle 10 upon which object detection and/or QR code detection can be performed.

In some examples, a trailer being proximate to the rear of the vehicle can be considered a trailer being close enough to the vehicle to indicate that the vehicle 10 is likely to be connected to the trailer.

Activation of the one or more rear spoiler down lights in dependence on such determination can allow a user working at the rear of the vehicle to carry out one or more tasks, such as attaching a trailer to the rear of the vehicle, more easily, effectively and/or safely. For example, as the vehicle 10 reverses up to the trailer, for example when it is dark or in low light levels, (vehicle is moving in R) one or more rear spoiler lights 12 are white, as the vehicle 10 is stopped and the driver is on the brake but still in R the one or more rear spoiler down lights 12 can go to red to help anyone outside the vehicle 10 complete the hitching of the trailer and retain their night vision.

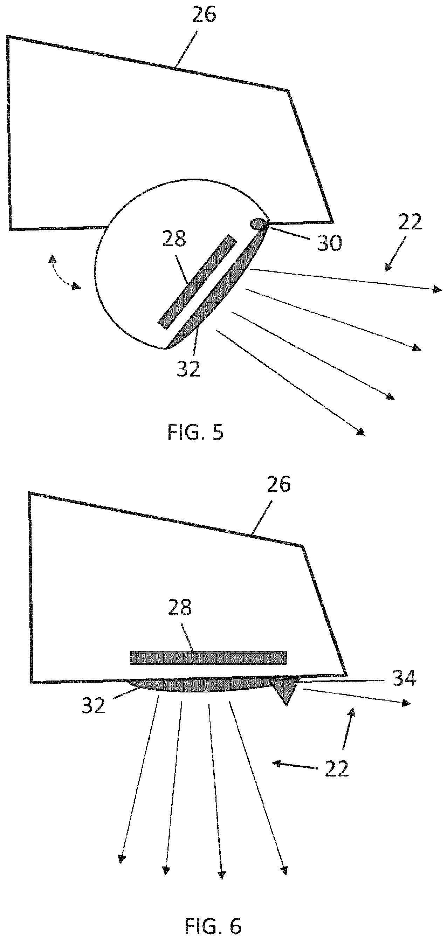

In some examples, the method 300 comprises receiving one or more light feedback sensor signals and controlling the one or more rear spoiler down lights 12 in dependence on the one or more light feedback sensor signals. In examples, one or more light feedback sensors 30 can be positioned at any suitable location or locations of the vehicle 10. For example, one or more light feedback sensors can be positioned on the rear spoiler 26 of the vehicle 10 and/or on and/or near one or more rear view cameras of the vehicle 10. See, for example, FIG. 5. In some examples, one or more rear view cameras of the vehicle 10 can be considered to be and/or comprise one or more light feedback sensors 30. For example, light contrast feedback from the one or more rear view cameras can be used as light feedback signal(s). In examples, the one or more rear spoiler downlights 12 can be controlled in any suitable way in dependence on the one or more light feedback sensor signals.

In some examples, the one or more light feedback sensor signals can be used to determine higher levels of reflective surfaces so that the one or more rear spoiler down lights 12 can be adjusted in intensity to reduce the reflection but, for example, still assist the rear-view camera(s). This would provide, for example, fewer overexposed parts of the image(s) from the rear view cameras.

In examples, one or more of the one or more rear spoiler down lights 12 can be controlled differently compared to one or more of the one or more rear spoiler downlights 12 in dependence on the one or more light feedback sensor signals.

If after a reversing manoeuvre a trailer is detected (for example, via camera, QR code, tow bar mounted bike carrier plugged in - trailer plug/ connection detected) and the vehicle 10 is then put in P then the one or more rear spoiler down lights 12 can remain on even if the ignition is switched off for a time to assist with trailer hitching
Accordingly, in some examples, the method 300 comprises maintaining activation of the one or more rear spoiler down lights 12 for a predetermined period after at least one drive unit of the vehicle 10 has been turned off. In examples, a drive unit of the vehicle 10 can be considered any unit of the vehicle 10 that provides tractive force to drive the vehicle 10. For example, an internal combustion engine and/or electric motor of the vehicle 10.

Any suitable predetermined time period for maintaining activation of the one or more rear spoiler down lights 12 after at least one drive unit of the vehicle 10 has been turned off can be used. In some examples, the period can be user selectable.

In examples, method 300 comprises controlling the intensity of the one or more rear spoiler down lights 12 in the dependence on determined ambient light level. The intensity of the one or more rear spoiler down lights 12 can be controlled and/or changed in dependence upon the determined ambient light level in any suitable way. For example, the intensity of the one or more rear spoiler down lights 12 can be reduced and/or increased in dependence on the determined ambient light level. Accordingly, in some examples, method 300 comprises reducing the intensity of the one or more rear spoiler down lights 12 in dependence on a reduction in determined ambient light level. In examples, an amount of one or more wavelengths of light of the one or more rear spoiler down lights 12 can be controlled in dependence on determined ambient light level. For example, one or more wavelengths of light of the one or more rear spoiler down lights 12 can be reduced in intensity in dependence on a reduction in determined ambient light level. For example, an amount of blue light produced by the one or more rear spoiler down lights can be reduced in dependence on a reduction in determined ambient light level. This is advantageous as, for example, it can aid better sleep during camping or outdoor activities with use of the one or more rear spoiler down lights, if for example the one or more rear spoiler downlights are providing additional lighting.

In some examples, method 300 comprise activating the one or more rear spoiler down lights 12 during one or more autonomous slow speed maneuvers. In examples, the one or more rear spoiler down lights 12 can be white during one or more autonomous slow speed maneuvers. For example, one or more ADAS functions such as vehicle summoning, autonomous parking, and/or remote driving via user controlled device and so on.

In some examples, method 300 comprises controlling orientation of the one or more rear spoiler down lights 12 to point to the one or more rear spoiler down lights 12 in a substantially rearward direction relative to the vehicle 10. In examples, orientation of the one or more rear spoiler down lights 12 can be controlled in any suitable way using any suitable method. For example, control system 208 can transmit and/or provide one or more control signals to control orientation of the one or more rear spoiler down lights 12. In some examples, the one or more rear spoiler down lights 12 can be controlled to pivot on one or more hinges so that they are more visible to traffic or people at a distance to the rear of the vehicle 10 and/or directed to the inside of the vehicle 10 to provide lighting inside the vehicle, such as in the load space of the vehicle, and can automatically be returned to an original orientation on road speed detection or door open/closed condition. See, for example, FIGs 4 and 5. Additionally or alternatively, one or more lenses of the one or more rear spoiler down lights 12 can be designed to direct light 22 to be visible at a distance to the rear of the vehicle 10 and/or in the load space. In examples, the lens or lenses are configured to be activated separately if needed. See, for example, FIGs 6 to 8.

As illustrated by the dashed arrows in the example of FIG. 4 the direction of the one or more rear spoiler down lights 12 can be rotated upwards to be substantially rearward facing, and therefore more visible to traffic or people at a distance, compared to the initial downward facing direction.

In some examples, orientation of the one or more rear spoiler down lights 12 can be controlled in dependence on any suitable situation and/or circumstances. For example, orientation of the one or more rear spoiler down lights 12 can be controlled in dependence on detection of a tow bar mounted storage unit being connected/fitted. This is advantageous as, for example, bike wheels and so on can obscure some part of other rear lights and such functionality allows for the one or more rear spoiler down lights 12 to operate as additional substantially rear facing light(s) in such circumstances.

Additionally, or alternatively, orientation of the one or more rear spoiler down lights 12 can be controlled in dependence on driver condition response, for example when the vehicle 10 is controlled to stop upon drive hands leaving the steering wheel. Additionally, or alternatively, orientation of the one or more rear spoiler down lights 12 can be controlled in dependence on detecting a potential rear impact. For example, the one or more rear spoiler down lights 12 can be activated, such as in any high visibility format, on detecting a vehicle travelling fast relative to the vehicle 10 indicating a potential impact to the rear of the vehicle 10. This is advantageous as it provides additional visibility and/or warning to drivers of other vehicles. Additionally, or alternatively, orientation of the one or more rear spoiler down lights 12 can be controlled in dependence on braking of the vehicle 10. For example, the one or more rear spoiler down lights 12 can be used to provide additional braking warning lights, such as in any high visibility format, when an autonomous emergency braking (AEB) event occurs.

Additionally, or alternatively, one or more rear spoiler down lights 12 with rear facing visibility could be used in indicator colour for high level indicators when a trailer light is plugged in.

In some examples, the one or more rear spoiler down lights 12 are/can be configured to direct light 22 in a substantially downward direction and also in a substantially rearward direction. See, for example, FIGs 6 to 8.

In some examples, the method 300 comprises controlling, when the vehicle 10 is stationary, the one or more rear spoiler down lights 12 in dependence on at least one of: use of one or more further lights of the vehicle 10 and music being played by the vehicle 10. In examples, the one or more rear spoiler down lights 12 can be controlled, in any suitable way, in dependence on at least one of: use of one or more further lights of the vehicle 10 and music being played by the vehicle 10. In some examples, the one or more rear spoiler down lights 12 can be controlled to align with one or more other lights, such as internal lights, of the vehicle 10.

In examples, the one or more rear spoiler down lights 12 can be controlled with a strobe and/or flash function with or without colour change.

In some examples, the one or more rear spoiler down lights 12 can be controlled to illuminate with a sequence of intensities and/or colours. For example, a user can input a sequence of intensities and/or colours using one or more human-machine interfaces of the vehicle 10. In some examples, the one or more rear spoiler down lights 12 can be controlled and/or programmed with a sequence of intensities and/or colours using a personal device of a user, such as a mobile telephone.

FIG. 5 schematically illustrates an example of a rear spoiler down light 12. In the example of FIG. 5, a spoiler 26 is illustrated comprising a rear spoiler down light 12. In the illustrated example, the rear spoiler down light 12 comprises a light emitting diode (LED) 28 and a lens 32. In the example of FIG. 5 the rear spoiler down light 12 is configured to pivot to be substantially rearward facing and to direct light 22 in a substantially rearward direction. In FIG. 5, the rear spoiler down light 12 is controlled by at least one motor to change orientation, to allow the rear spoiler down light 12, for example, to move between a generally downward facing direction and a generally rearward facing direction. However, in examples, any suitable orientation and/or change in orientation of a rear spoiler down light 12 can be used. Accordingly, in the example of FIG. 5, the rear spoiler down light 12 can be positioned via a motor or motors so that the rear spoiler down light 12 can be used as a down light or a high-level light for use when towing, for example.

In the example of FIG. 5 the rear spoiler down light 12 comprises a light feedback sensor 30. In the example of FIG. 5 the light feedback sensor 30 is configured to detect light reflected back from a surface, for example a higher loaded trailer or a caravan and so on. In the illustrated example, if a higher loaded trailer or a vehicle or caravan is detected due to the light levels picked up from the light feedback sensor 30 the high-level lights are switched off so there is no light reflected at the cabin of the vehicle 10.

In some examples, the determination of reflected light can be done in relation to the light 22 being output. For example, this could be a solid colour and/or intensity or a flicker in the light that is output to allow a determination that the light detected by the light feedback sensor is indeed reflected light.

In examples, the rear spoiler downlight 12 is configured to go from a downward position for hitching a trailer to a rear visibility position once a speed threshold is reached, for example above 10kph.

In some examples, the rear spoiler downlight 12 can be configured to operate as an additional fog light.

FIG. 6 schematically illustrates an example of a rear spoiler down light 12. In the example of FIG. 6, a spoiler 26 is illustrated comprising a rear spoiler down light 12. The spoiler 26 and rear spoiler down light 12 of FIG. 6 are similar to the spoiler and rear spoiler down light 12 of FIG. 5. However, in the example of FIG. 6 the rear spoiler down light is not configured to change orientation and comprises a lens portion 34 configured to direct light 22 from the rear spoiler down light 12 in a substantially rearward direction. In examples, any suitable lens portion 34 having any suitable configuration and/or properties can to direct light from the LED 28 in a generally rearward direction can be used. In examples, the lens portion 34 can be part of lens 32 or separate from it. Accordingly, in the example of FIG. 6 the rear spoiler down light 12 is configured to direct light 22 in a generally downward direction and also a generally rearward direction simultaneously.

In the example of FIG. 5, the rear spoiler down light 12 can direct multi coloured light 22 downwards and to the rear of the vehicle 10. In examples, this can be one or more LED's 28 at one or more light locations across the spoiler 26.

In the example of FIG. 6, the light 22 to the rear of the vehicle 10 is the same colour and intensity as the downwards light 22.

In examples, the downwards light 22 can be in infrared wavelength(s) if, for example, the rear camera works in near infrared so that the camera pick up is improved but without additional rear lighting. This may be preferable, for example, should the owner of the vehicle 10 have a drive way that is close to the house/ windows and so on. Infrared LED's can also help illumination and visibility for house hold cameras at night and as such provide better visibility for overall security systems.

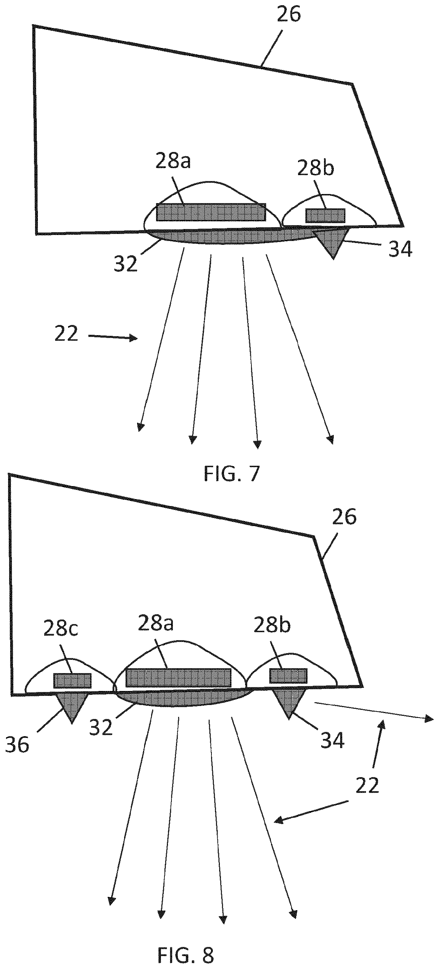

FIG. 7 schematically illustrates an example of a rear spoiler down light 12. In the example of FIG. 7, a spoiler 26 is illustrated comprising a rear spoiler down light 12. The spoiler 26 and rear spoiler down light 12 of FIG. 7 are similar to the spoiler and rear spoiler down light 12 of FIG. 6. However, in the example of FIG. 7 the rear spoiler down light 12 comprises an LED 28a for providing generally downward facing light 22 and a separate LED 22b for providing generally rearward facing light 22. In this configuration the rear facing part of the lens 34 can be configured to provide either the same light colour and intensity as the downwards light, for example, for illumination and camera hazard recognition when in reverse, or a separate colour/intensity sequence, for example flashing, to that of the downwards light, for example, during autonomous parking and so on.

In examples, for towing a low-level trailer the rear direction light may be the only light active during driving above 10kph to support the visibility of the car in case the trailer impedes visibility of the tail lights.

FIG. 8 schematically illustrates an example of a rear spoiler down light 12. In the example of FIG. 8, a spoiler 26 is illustrated comprising a rear spoiler down light 12. The spoiler 26 and rear spoiler down light 12 of FIG. 8 are similar to the spoiler and rear spoiler down light 12 of FIG. 7. However, in the example of FIG. 8 the rear spoiler down light 12 comprises an LED 28c and a lens portion 36 configured to direct light 22 from the rear spoiler down light 12 into a load space of the vehicle 10.

In this configuration the rear facing part of the lens 34 can be configured to provide either the same light colour and intensity as the downwards light, for example, for illumination and camera hazard recognition when in reverse, or a separate colour/intensity sequence, for example flashing, to that of the downwards light, for example during autonomous parking and so on.

Additionally, or alternatively, the internal facing part of the lens 36 can be configured to provide either the same light colour and intensity as the downwards light or a separate colour/intensity sequence to that of the downwards light, for example during loading or unloading of the internal load space.

Examples of the disclosure are advantageous. For example, examples of the disclosure provide for efficient and effective use of one or more rear spoiler down lights 12.

For example, examples provide for use of one or more rear spoiler down lights 12 to assist in user actions outside and/or proximate a vehicle 10 such as trailer hitching and so on.

For example, examples provide for use of one or more rear spoiler down lights 12 to assist in use of one or more rear cameras of a vehicle 10 for enhanced operation such as enhanced object detection and so on.

As used herein "for" should be considered to also include "configured or arranged to". For example, "a control system for" should be considered to also include "a control system configured or arranged to".

For purposes of this disclosure, it is to be understood that the controller(s) described herein can each comprise a control unit or computational device having one or more electronic processors. A vehicle and/or a system thereof may comprise a single control unit or electronic controller or alternatively different functions of the controller(s) may be embodied in, or hosted in, different control units or controllers. A set of instructions could be provided which, when executed, cause said controller(s) or control unit(s) to implement the control techniques described herein (including the described method(s)). The set of instructions may be embedded in one or more electronic processors, or alternatively, the set of instructions could be provided as software to be executed by one or more electronic processor(s). For example, a first controller may be implemented in software run on one or more electronic processors, and one or more other controllers may also be implemented in software run on one or more electronic processors, optionally the same one or more processors as the first controller. It will be appreciated, however, that other arrangements are also useful, and therefore, the present disclosure is not intended to be limited to any particular arrangement. In any event, the set of instructions described above may be embedded in a computer-readable storage medium (e.g., a non-transitory computer-readable storage medium) that may comprise any mechanism for storing information in a form readable by a machine or electronic processors/computational device, including, without limitation: a magnetic storage medium (e.g., floppy diskette); optical storage medium (e.g., CD-ROM); magneto optical storage medium; read only memory (ROM); random access memory (RAM); erasable programmable memory (e.g., EPROM and EEPROM); flash memory; or electrical or other types of medium for storing such information/instructions.

It will be appreciated that various changes and modifications can be made to the present invention without departing from the scope of the present application. As used here 'module' refers to a unit or apparatus that excludes certain parts/components that would be added by an end manufacturer or a user. The blocks illustrated in the FIG. 3 may represent steps in a method and/or sections of code in the computer program 206. The illustration of a particular order to the blocks does not necessarily imply that there is a required or preferred order for the blocks and the order and arrangement of the block may be varied. Furthermore, it may be possible for some steps to be omitted.

Although embodiments of the present invention have been described in the preceding paragraphs with reference to various examples, it should be appreciated that modifications to the examples given can be made without departing from the scope of the invention, which is defined by the appended claims. Features described in the preceding description may be used in combinations other than the combinations explicitly described. Although functions have been described with reference to certain features, those functions may be performable by other features whether described or not. Although features have been described with reference to certain embodiments, those features may also be present in other embodiments whether described or not.

## Claims

1. A control system (208) for a vehicle (10), the control system (208) comprising one or more controllers (200), wherein the control system (208) is configured to:
determine one or more of
selection of a forward or reverse vehicle travel direction,
vehicle speed, and
vehicle driving mode that configures the vehicle for one or more driving scenarios; and
control one or more rear spoiler down lights (12) to illuminate at a colour and intensity in dependence on the determination,
**characterized in that**,
the control system (208) is further configured, when mounted in the vehicle, to:
determine an ambient light level, the ambient light level being exterior to the vehicle,
and to activate the one or more rear spoiler down lights (12) on selection of a reverse travel direction and the determined ambient light level being above or below a threshold.

2. The control system (208) of claim 1, wherein the control system (208) is configured to control a change in colour and intensity of the one or more rear spoiler down lights (12) from a first colour and intensity to a second colour and intensity in dependence on the determination.

3. The control system (208) of claim 1 or 2, wherein the control system (208) is configured to control at least one of colour and a change in intensity from a first non-zero intensity to a second, different non-zero intensity of the one or more rear spoiler down lights (12) in dependence on the determination.

4. The control system (208) of claim 1, 2 or 3, wherein colour of the one or more rear spoiler down lights (12) is user selectable.

5. The control system (208) of any preceding claim, wherein the control system (208) is configured to change colour of the one or more rear spoiler down lights (12) in dependence on the selected travel direction.

6. The control system (208) of claim 4, wherein the control system (208) is configured to control the one or more rear spoiler down lights (12) to have a red colour when a forward travel direction is selected.

7. The control system (208) of any preceding claim, wherein the control system (208) is configured to control the one or more rear spoiler down lights (12) to have a red colour when the vehicle (10) is in a forward travel direction and the vehicle speed is below a threshold.

8. The control system (208) of claim 7, wherein the control system (208) is configured to determine on-road and/or off-road driving conditions of the vehicle (10) and wherein the threshold is dependent on one or more of the determined driving mode of the vehicle (10) and the determined on-road and/or off-road driving conditions.

9. The control system (208) of claim 7 or 8, wherein the control system (208) is configured to change colour of the one or more rear spoiler down lights (12) when the vehicle speed exceeds the threshold.

10. The control system (208) of any preceding claim, wherein the control system (208) is configured to determine sensor information from at least one sensor signal and to determine, in dependence on the determined sensor information, at least one of trailer light plug connection, trailer proximate rear of the vehicle (10), and ambient light level;
and the control system (208) is configured to activate the one or more rear spoiler down lights (12) in dependence on the determination made in dependence on the determined sensor information.

11. The control system (208) of claim 10, wherein the control system (208) is configured to maintain activation of the one or more rear spoiler down lights (12) for a predetermined period after at least one drive unit of the vehicle (10) has been turned off, the drive unit being a unit of the vehicle (10) that provides tractive force to drive the vehicle (10).

12. The control system (208) of claim 9 or 10, wherein the control system (208) is configured to control the intensity of the one or more rear spoiler down lights (12) in dependence on determined ambient light level; wherein the control system (208) is optionally configured to reduce the intensity of the one or more rear spoiler down lights (12) in dependence on a reduction in determined ambient light level.

13. The control system (208) of any preceding claim, wherein the control system (208) is configured to activate the one or more rear spoiler down lights (12) during one or more autonomous slow speed manoeuvres.

14. A vehicle (10) comprising a control system (208) as claimed in at least one of claims 1 to 13 and one or more rear spoiler down lights (12).

15. A method (300) of controlling one or more rear spoiler down lights (12) of a vehicle (10), comprising:
determining an ambient light level, the ambient light level being exterior to the vehicle,
determining (302) one or more of
selection of a forward or rearward vehicle travel direction,
vehicle speed, and
vehicle driving mode that configures the vehicle for one or more driving scenarios, the determining comprising a selection of a reverse travel direction; and
controlling (304) the one or more rear spoiler down lights (12) to illuminate at a colour and intensity in dependence on the determination, wherein the controlling comprises activating the one or more rear spoiler down lights (12) on selection of the reverse travel direction and the determined ambient light level being above or below a threshold.

## Patentansprüche

1. Steuersystem (208) für ein Fahrzeug (10), das Steuersystem (208) umfassend eine oder mehrere Steuerungen (200), wobei das Steuersystem (208) konfiguriert ist zum:
Bestimmen eines oder mehrerer von
einer Auswahl einer Vorwärts- oder Rückwärtsfahrzeugbewegungsrichtung,
einer Fahrzeuggeschwindigkeit und
einem Fahrzeugfahrmodus, der das Fahrzeug für ein oder mehrere Fahrszenarien konfiguriert, und
Steuern eines oder mehrerer Heckspoiler-Downlights (12), um in Abhängigkeit von der Bestimmung mit einer Farbe und Intensität zu leuchten, **dadurch gekennzeichnet, dass** das Steuersystem (208), wenn es in dem Fahrzeug montiert ist, ferner konfiguriert ist zum:
Bestimmen eines Umgebungslichtpegels, wobei sich der Umgebungslichtpegel außerhalb des Fahrzeugs befindet, und zum Aktivieren des einen oder der mehreren Heckspoiler-Downlights (12) bei Auswahl einer Rückwärtsbewegungsrichtung und einem Befinden des bestimmten Umgebungslichtpegels über oder unter einem Schwellenwert.

2. Steuersystem (208) nach Anspruch 1, wobei das Steuersystem (208) konfiguriert ist, um in Abhängigkeit von der Bestimmung eine Änderung der Farbe und Intensität des einen oder der mehreren Heckspoiler-Downlights (12) von einer ersten Farbe und Intensität zu einer zweiten Farbe und Intensität zu steuern.

3. Steuersystem (208) nach Anspruch 1 oder 2, wobei das Steuersystem (208) konfiguriert ist, um in Abhängigkeit von der Bestimmung mindestens eines von der Farbe und einer Änderung der Intensität von einer ersten Intensität ungleich null zu einer zweiten, anderen Intensität ungleich null des einen oder der mehreren Heckspoiler-Downlights (12) zu steuern.

4. Steuersystem (208) nach Anspruch 1, 2 oder 3, wobei die Farbe des einen oder der mehreren Heckspoiler-Downlights (12) benutzerwählbar ist.

5. Steuersystem (208) nach einem der vorstehenden Ansprüche, wobei das Steuersystem (208) konfiguriert ist, um in Abhängigkeit von der ausgewählten Fahrtrichtung die Farbe des einen oder der mehreren Heckspoiler-Downlights (12) zu ändern.

6. Steuersystem (208) nach Anspruch 4, wobei das Steuersystem (208) konfiguriert ist, um das eine oder die mehreren Heckspoiler-Downlights (12) zu steuern, um eine rote Farbe aufzuweisen, wenn eine Vorwärtsbewegungsrichtung ausgewählt ist.

7. Steuersystem (208) nach einem der vorstehenden Ansprüche, wobei das Steuersystem (208) konfiguriert ist, um das eine oder die mehreren Heckspoiler-Downlights (12) zu steuern, um eine rote Farbe aufzuweisen, wenn sich das Fahrzeug (10) in einer Vorwärtsbewegungsrichtung befindet und die Fahrzeuggeschwindigkeit unter einem Schwellenwert befindet.

8. Steuersystem (208) nach Anspruch 7, wobei das Steuersystem (208) konfiguriert ist, um Straßen- und/oder Geländefahrbedingungen des Fahrzeugs (10) zu bestimmen, und wobei der Schwellenwert von einem oder mehreren des bestimmten Fahrmodus des Fahrzeugs (10) und den bestimmten Straßen- und/oder Geländefahrbedingungen abhängt.

9. Steuersystem (208) nach Anspruch 7 oder 8, wobei das Steuersystem (208) konfiguriert ist, um die Farbe des einen oder der mehreren Heckspoiler-Downlights (12) zu ändern, wenn die Fahrzeuggeschwindigkeit den Schwellenwert überschreitet.

10. Steuersystem (208) nach einem der vorstehenden Ansprüche, wobei das Steuersystem (208) konfiguriert ist, um Sensorinformationen von mindestens einem Sensorsignal zu bestimmen und, in Abhängigkeit von den bestimmten Sensorinformationen, mindestens eines von einer Anhängerlichtsteckerverbindung, einem Anhänger nahe eines Hecks des Fahrzeugs (10) und dem Umgebungslichtpegel zu bestimmen,
und das Steuersystem (208) konfiguriert ist, um in Abhängigkeit von der Bestimmung, die in Abhängigkeit von den bestimmten Sensorinformationen getroffen wird, das eine oder die mehreren Heckspoiler-Downlights (12) zu aktivieren.

11. Steuersystem (208) nach Anspruch 10, wobei das Steuersystem (208) konfiguriert ist, um eine Aktivierung des einen oder der mehreren Heckspoiler-Downlights (12) für einen zuvor bestimmten Zeitraum aufrechtzuerhalten, nachdem mindestens eine Antriebseinheit des Fahrzeugs (10) ausgeschaltet wurde, wobei die Antriebseinheit eine Einheit des Fahrzeugs (10) ist, die eine Zugkraft bereitstellt, um das Fahrzeug (10) anzutreiben.

12. Steuersystem (208) nach Anspruch 9 oder 10, wobei das Steuersystem (208) konfiguriert ist, um in Abhängigkeit von dem bestimmten Umgebungslichtpegel die Intensität des einen oder der mehreren Heckspoiler-Downlights (12) zu steuern, wobei das Steuersystem (208) optional konfiguriert ist, um in Abhängigkeit von einer Verringerung des bestimmten Umgebungslichtpegels die Intensität des einen oder der mehreren Heckspoiler-Downlights (12) zu verringern.

13. Steuersystem (208) nach einem der vorstehenden Ansprüche, wobei das Steuersystem (208) konfiguriert ist, um das eine oder die mehreren Heckspoiler-Downlights (12) während eines oder mehrerer autonomer Manöver bei langsamer Geschwindigkeit zu aktivieren.

14. Fahrzeug (10), umfassend ein Steuersystem (208) nach mindestens einem der Ansprüche 1 bis 13 und ein oder mehrere Heckspoiler-Downlights (12).

15. Verfahren (300) zum Steuern eines oder mehrerer Heckspoiler-Downlights (12) eines Fahrzeugs (10), umfassend:
Bestimmen eines Umgebungslichtpegels, wobei sich der Umgebungslichtpegel außerhalb des Fahrzeugs befindet,
Bestimmen (302) eines oder mehrerer von
der Auswahl einer Vorwärts- oder Rückwärtsfahrzeugbewegungsrichtung,
der Fahrzeuggeschwindigkeit und
dem Fahrzeugfahrmodus, der das Fahrzeug für ein oder mehrere Fahrszenarien konfiguriert, das Bestimmen umfassend eine Auswahl einer Rückwärtsbewegungsrichtung; und
Steuern (304) des einen oder der mehreren Heckspoiler-Downlights (12), um in Abhängigkeit von der Bestimmung mit einer Farbe und Intensität zu leuchten, wobei das Steuern das Aktivieren des einen oder der mehreren Heckspoiler-Downlights (12) umfasst, bei Auswahl der Rückwärtsbewegungsrichtung und dem Befinden des bestimmten Umgebungslichtpegels über oder unter einem Schwellenwert.

## Revendications

1. Système de commande (208) pour un véhicule (10), le système de commande (208) comprenant un ou plusieurs dispositifs de commande (200), dans lequel le système de commande (208) est configuré pour :
déterminer un ou plusieurs parmi
la sélection d'un sens de marche avant ou arrière du véhicule,
la vitesse du véhicule, et
le mode de conduite du véhicule qui configure le véhicule pour un ou plusieurs scénarios de conduite ; et
commander un ou plusieurs feux vers le bas (12) de becquet arrière pour qu'ils s'allument avec une couleur et une intensité en fonction de la détermination, **caractérisé en ce que** le système de commande (208) est en outre configuré, lorsqu'il est monté dans le véhicule, pour :
déterminer un niveau de lumière ambiante, le niveau de lumière ambiante étant extérieur au véhicule, et pour activer le ou les feux vers le bas (12) de becquet arrière lors de la sélection d'un sens de marche arrière et lorsque le niveau de lumière ambiante déterminé est supérieur ou inférieur à un seuil.

2. Système de commande (208) selon la revendication 1, dans lequel le système de commande (208) est configuré pour commander un changement de couleur et d'intensité du ou des feux vers le bas (12) de becquet arrière d'une première couleur et d'une première intensité à une seconde couleur et une seconde intensité en fonction de la détermination.

3. Système de commande (208) selon la revendication 1 ou 2, dans lequel le système de commande (208) est configuré pour commander au moins l'un d'une couleur et d'un changement d'intensité d'une première intensité non nulle à une seconde intensité non nulle différente du ou des feux vers le bas (12) de becquet arrière en fonction de la détermination.

4. Système de commande (208) selon la revendication 1, 2 ou 3, dans lequel la couleur du ou des feux vers le bas (12) de becquet arrière peut être sélectionnée par un utilisateur.

5. Système de commande (208) selon l'une quelconque revendication précédente, dans lequel le système de commande (208) est configuré pour changer la couleur du ou des feux vers le bas (12) de becquet arrière en fonction du sens de marche sélectionné.

6. Système de commande (208) selon la revendication 4, dans lequel le système de commande (208) est configuré pour commander le ou les feux vers le bas (12) de becquet arrière pour qu'ils aient une couleur rouge lorsqu'un sens de marche avant est sélectionné.

7. Système de commande (208) selon l'une quelconque revendication précédente, dans lequel le système de commande (208) est configuré pour commander le ou les feux vers le bas (12) de becquet arrière pour qu'ils aient une couleur rouge lorsque le véhicule (10) est dans un sens de marche avant et que la vitesse du véhicule est inférieure à un seuil.

8. Système de commande (208) selon la revendication 7, dans lequel le système de commande (208) est configuré pour déterminer des conditions de conduite sur route et/ou hors route du véhicule (10) et dans lequel le seuil dépend d'un ou plusieurs éléments parmi le mode de conduite déterminé du véhicule (10) et les conditions de conduite sur route et/ou hors route déterminées.

9. Système de commande (208) selon la revendication 7 ou 8, dans lequel le système de commande (208) est configuré pour changer la couleur du ou des feux vers le bas (12) de becquet arrière lorsque la vitesse du véhicule dépasse le seuil.

10. Système de commande (208) selon l'une quelconque revendication précédente, dans lequel le système de commande (208) est configuré pour déterminer des informations de capteur à partir d'au moins un signal de capteur et pour déterminer, en fonction des informations de capteur déterminées, au moins l'un parmi une connexion de la prise d'éclairage de remorque, la proximité d'une remorque de l'arrière du véhicule (10), et le niveau de lumière ambiante ;
et le système de commande (208) est configuré pour activer le ou les feux vers le bas (12) de becquet arrière en fonction de la détermination faite en fonction des informations de capteur déterminées.

11. Système de commande (208) selon la revendication 10, dans lequel le système de commande (208) est configuré pour maintenir l'activation du ou des feux vers le bas (12) de becquet arrière pendant une période prédéterminée après qu'au moins une unité d'entraînement du véhicule (10) a été éteinte, l'unité d'entraînement étant une unité du véhicule (10) qui fournit une force de traction pour entraîner le véhicule (10).

12. Système de commande (208) selon la revendication 9 ou 10, dans lequel le système de commande (208) est configuré pour commander l'intensité du ou des feux vers le bas (12) de becquet arrière en fonction du niveau de lumière ambiante déterminé ; dans lequel le système de commande (208) est facultativement configuré pour réduire l'intensité du ou des feux vers le bas (12) de becquet arrière en fonction d'une réduction de niveau de lumière ambiante déterminé.

13. Système de commande (208) selon l'une quelconque revendication précédente, dans lequel le système de commande (208) est configuré pour activer le ou les feux vers le bas (12) de becquet arrière pendant une ou plusieurs manœuvres autonomes à faible vitesse.

14. Véhicule (10) comprenant un système de commande (208) selon au moins l'une des revendications 1 à 13 et un ou plusieurs feux vers le bas (12) de becquet arrière.

15. Procédé (300) de commande d'un ou plusieurs feux vers le bas (12) de becquet arrière d'un véhicule (10), comprenant :
la détermination d'un niveau de lumière ambiante, le niveau de lumière ambiante étant extérieur au véhicule,
la détermination (302) d'un ou plusieurs parmi
la sélection d'un sens de marche avant ou arrière du véhicule,
la vitesse du véhicule, et
le mode de conduite du véhicule qui configure le véhicule pour un ou plusieurs scénarios de conduite, la détermination comprenant une sélection d'un sens de marche arrière ; et
la commande (304) du ou des feux vers le bas (12) de becquet arrière pour qu'ils s'allument avec une couleur et une intensité en fonction de la détermination, dans lequel la commande comprend l'activation du ou des feux vers le bas (12) de becquet arrière lors de la sélection du sens de marche arrière et lorsque le niveau de lumière ambiante déterminé est supérieur ou inférieur à un seuil.
